# EUROPEAN PATENT APPLICATION

(11) **EP 4 836 398 A1**
(43) Date of publication of application: **04.11.2026**
(21) Application number: 25315145.0
(22) Date of filing: 29.04.2025
(51) Int. Cl.: H04N 19/105, H04N 19/11, H04N 19/119, H04N 19/70

(54) **METHOD AND APPARATUS FOR DECODING OR ENCODING A PICTURE REPURPOSING A SYNTAX ELEMENT TO CONTROL DIFFERENT FUNCTIONALITIES OF A CODING TOOL-**

(71) Applicant: Beijing Xiaomi Mobile Software Co., Ltd., Beijing Beijing 100085 (CN)
(72) Inventor: Abdoli, Mohsen, Beijing, 100085 (CN); Ghaznavi Youvalari, Ramin, Beijing, 100085 (CN); Tissier, Alexandre, Beijing, 100085 (CN); Plowman, Frank, Beijing, 100085 (CN)
(74) Representative: Zimmermann, Tankred Klaus

(57) **Abstract**

A method for decoding a current block of a picture from a data stream, the method comprises
- parsing a syntax element associated with the current block from the data stream,
- using the syntax element to control a selected internal functionality out of a plurality. of functionalities of a coding tool,
wherein the selected functionality is selected out of the plurality of functionalities according to an applicability condition for the current block for one or more functionalities of the plurality of functionalities,
wherein, for at least one functionality, the applicability condition depends on at least one reconstruction sample as reconstructible from a previous portion of the data stream, and

predicting the current block with the coding tool with the selected functionality controlled according to the syntax element.

## Description

### Technical Field

The present disclosure generally relates to the field of encoding/decoding pictures, images or videos, and embodiments of the present disclosure concern improvements for parallelization when processing a block of a picture. More specific embodiments of the present disclosure relate to methods and apparatus for processing a current block of a picture, wherein a provisional syntax element is designed to possibly control different internal functionalities for a given intra coding tool.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding of the picture, the image or the video, a state-of-the-art process may use parallelization of parsing and reconstruction methods to improve efficiency.

Thus, there is a need to provide further improvements for processing a picture, an image or a video, e.g., when encoding and/or decoding of the picture, the image or the video.

### Summary

The present disclosure provides a method for decoding a current block of a picture from a data stream, the method comprising:
- parsing a syntax element associated with the current block from the data stream,
- using the syntax element to control a selected internal functionality out of a plurality of functionalities of a coding tool,
   wherein the selected functionality is selected out of the plurality of functionalities according to an applicability condition for the current block for one or more functionalities of the plurality of functionalities,
   wherein, for at least one functionality, the applicability condition depends on at least one reconstruction sample as reconstructible from a previous portion of the data stream, and
- predicting the current block with the coding tool with the selected functionality controlled according to the syntax element.

According to an embodiment, the plurality of functionalities comprise at least two functionalities, an intended functionality and at least one fallback functionality.

According to an embodiment, the syntax element is used to control the intended functionality of the coding tool, in case the applicability condition for the current block is fulfilled for the intended functionality.

According to an embodiment, in case the applicability condition for the current block is not fulfilled for the intended functionality, the syntax element is repurposed to control the at least one fallback functionality of the coding tool.

According to an embodiment, the plurality of functionalities are evaluated according to a predefined order with respect to the applicability condition for the current block, until at least one functionality for which the applicability condition is firstly fulfilled, is selected, or at least until a - in the predefined order - pen-ultimate functionality, for which the applicability condition is still not fulfilled, whereupon the - in the predefined order - last functionality is selected.

According to an embodiment, the method comprises, depending on a parsed value of the syntax element having a predetermined value,
predicting the current block with the coding tool with none of the functionalities, without performing an evaluation on the applicability condition for the current block for one or more functionalities of the plurality of functionalities, or
performing an evaluation on the applicability condition for the current block for one or more functionalities of the plurality of functionalities and predicting the current block with the coding tool with the selected functionality controlled according to the syntax element, with performing an evaluation on the applicability condition for the current block for one or more functionalities of the plurality of functionalities.

According to an embodiment, controlling the selected functionality involves selectively enabling or disabling the selected functionality for the current block and/or adjusting a parameter of the selected functionality.

According to an embodiment, the plurality of functionalities comprises one or more of the following:
- a usage of Position-Dependent Prediction (PDP),
- a usage of Wide-Angle Intra Prediction (WAIP),
- a fusion of Intra Prediction Modes (IPM).

According to an embodiment, the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
i) the usage of PDP, and the associated applicability condition of the usage of PDP comprises that an IPM index of the current block corresponds to the angular IPM and the IPM index of the IPM is even;
ii) the usage of WAIP, and the associated applicability condition of the usage of WAIP comprises that an IPM index of the current block corresponds to the angular IPM and the index is located in the first or fourth quadrant;
iii) a fusion of the IPM for the current block with the Planar Mode, and the associated applicability condition of the fusion with the Planar Mode comprises that the current block is not coded with Planar; and/or
iv) a fusion of the IPM for the current block with DC Mode, and the associated applicability condition of the fusion with the DC Mode comprises that the current block is not coded with DC.

According to an embodiment, the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the fusion of IPM modes comprises one or more of the following:
- switching between using only one IPM and fusing more than one IPM,
- setting a number of IPM modes to be fused,
- selecting one out of more than one inference modes for inferring the IPM modes to be fused based on an already reconstructed neighbourhood of the current block,
- adjusting fusion weights for varying the fusion between the IPM modes over the current block.

According to an embodiment, the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
v) the switching between using only one IPM and fusing more than one IPM and/or setting a number of IPM modes to be fused, whose associated applicability condition comprises that a sum of n largest HoG amplitudes exceeds a predetermined fraction of a sum over all HoG, wherein n >=1; and/or
vi) selecting one out of more than one inference modes for inferring the IPM modes to be fused based on an already reconstructed neighbourhood of the current block, and the associated applicability condition comprises that the m largest HoG amplitudes exceed a predetermined fraction of the maximum HoG amplitude and/or fall within a defined range, wherein m>=1.

The present invention further discloses a method for encoding a current block of a picture into a data stream, the method comprising:
- signalling a syntax element associated with the current block into the data stream,
- using the syntax element to control a selected internal functionality out of a plurality of functionalities of a coding tool,
   wherein the selected functionality is selected out of the plurality of functionalities according to an applicability condition for the current block for one or more functionalities of the plurality of functionalities,
- encoding the current block by predicting the current block with the coding tool with the selected functionality controlled according to the syntax element.

The present invention further discloses an apparatus for decoding a current block of a picture from a data stream, the apparatus configured to
- parse a syntax element associated with the current block from the data stream,
- using the syntax element to control a selected internal functionality out of a plurality of functionalities of a coding tool,
   wherein the selected functionality is selected out of the plurality of functionalities according to an applicability condition for the current block for one or more functionalities of the plurality of functionalities, and
- predict the current block with the coding tool with the selected functionality controlled according to the syntax element.

The present invention further discloses a data stream having encoded thereinto a current block of a picture, wherein the current block is encoded using a method according to the invention.

The present invention further discloses a non-transitory digital storage medium having a computer program stored thereon to perform a method according to the invention when said computer program is run by a computer.

The technical solutions provided according to embodiments of the present disclosure have the following beneficial effects.

An idea underlying the present application is that coding a current block of a picture my be rendered more efficient by specifically treating a syntax element associated with the current block, which is signalled in the data stream and used to control a selected internal functionality out of a plurality of functionalities of a coding tool so as to predict the current block with the coding tool with the selected functionality controlled according to the syntax element, in a specific manner, namely in that the selected functionality is selected out of the plurality of functionalities according to an applicability condition for the current block for one or more functionalities of the plurality of functionalities. By this measure it is possible to, for instance, apply the syntax element to an intended functionality and, if a corresponding applicability condition does not apply, to a fallback functionality. By this measure, the signaling overhead associated with the transmission of the syntax element is made efficient in that it is related to a sequence of functionalities of, for instance, decreasing applicability likelihood.

According to embodiments, the coding tool may be an intra coding tool and the applicability condition may be dependent on circumstances occurring in the reconstruction phase.

A state-of-the-art process, for processing a picture, an image or a video, e.g., when encoding and/or decoding of the picture, the image or the video, may apply parallelization to improve efficiency when encoding or decoding a picture. In modern professional video codecs, particularly at the decoder side, a clear architectural separation is typically established between the parsing phase and the sample reconstruction phase. This separation serves to enable efficient parallelization across independently decodable regions such as slices, tiles, or coding tree units (CTUs). To support such parallel processing, the reconstruction phase for a given region generally does not begin until the parsing phase has been completed. Consequently, the parser must operate independently of any sample data that is only available after reconstruction.

Such state of the art parallelization strategy may be compromised when parsing dependencies occur, which are violations of this decoupling principle. Parsing dependencies result when the parsing or interpretation of certain syntax elements relies on information derived from reconstructed samples of the same or reference frames. Typical examples include:
- Selecting CABAC context models based on the values of reconstructed neighboring samples;
- Determining the number of bins for intra prediction mode (IPM) coding based on reconstructed data;
- Disallowing motion vector signaling depending on characteristics of reconstructed regions.

Parsing dependencies introduce processing bottlenecks by preventing the parallel execution of parsing and reconstruction, resulting in increased decoder complexity and reduced throughput.

Beyond limiting parallelization, parsing dependencies can also lead to bitstream inefficiencies, particularly when they constrain the signaling of internal aspects of coding tools. In conventional designs, if the applicability of a coding tool functionality depends on reconstructed sample data, then syntax elements dedicated to that functionality may be signaled even in blocks where the functionality ultimately does not apply. For example, in a scenario where an internal extension to the regular IPM coding tool is applicable only to angular modes, but the IPM is not known at the time of parsing due to a parsing dependency, control flags for this functionality might be redundantly signaled in blocks using non-angular modes. This results in unnecessary bitrate consumption.

Embodiments of the present disclosure address the above shortcomings in the prior art by considering a particular scenario, where an intra coding tool incorporates an internal functionality that is applicable only to a subset of blocks coded with that coding tool. Furthermore, the applicability of these functionalities is determined no earlier than the sample reconstruction phase. Embodiments of the present disclosure propose to dedicate a provisional control flag for such block and repurpose it to another control flag if during the reconstruction phase the initial purpose of the control flag turns to be not applicable for the block.

The present disclosure is advantageous because it provides mechanisms that avoid or relax parsing dependencies. In particular, the invention enables signaling and/or parsing strategies or structural arrangements that allow the controlling of coding tool functionalities to be determined during the reconstruction phase -without introducing parsing dependencies. As a result both coding efficiency and decoder parallelism are improved, while avoiding the bitrate overhead associated with misapplied signaling.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates angular Intra Prediction Modes (IPMs) in VVC and ECM,
- Fig. 4(A)-Fig. 4(B): illustrate reference samples or blocks for a wide-angular intra prediction of a block a width W and a height H,
- Fig. 5: illustrates a problem of discontinuity in case of angular intra prediction directions beyond 45°,
- Fig. 6: illustrates a L shaped neighborhood for a given predicted block,;

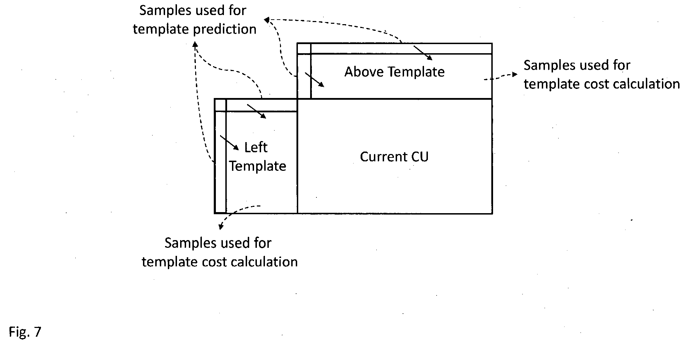

- Fig. 7: illustrates template-based intra mode derivation (TIMD) templates for a cost calculation or determination,
- Fig. 8: illustrates a flow diagram of a method for decoding an encoded data stream in accordance with embodiments of the present disclosure,
- Fig. 9: illustrates a flow diagram of a method for parsing a current block of a picture in accordance with embodiments of the present disclosure;
- Fig. 10: illustrates a flow diagram of a method for sample reconstructing a current block of a picture in accordance with embodiments of the present disclosure;
- Fig. 11: illustrates a flow diagram of a method for encoding a picture into an encoded data stream in accordance with embodiments of the present disclosure,
- Fig. 12: illustrates a block diagram of a decoder for decoding an encoded data stream in accordance with embodiments of the present disclosure,
- Fig. 13: illustrates a block diagram of an encoder for encoding a picture into an encoded data stream in accordance with embodiments of the present disclosure,
- Fig. 14: illustrates a data stream in accordance with embodiments of the present disclosure, and
- Fig. 15: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

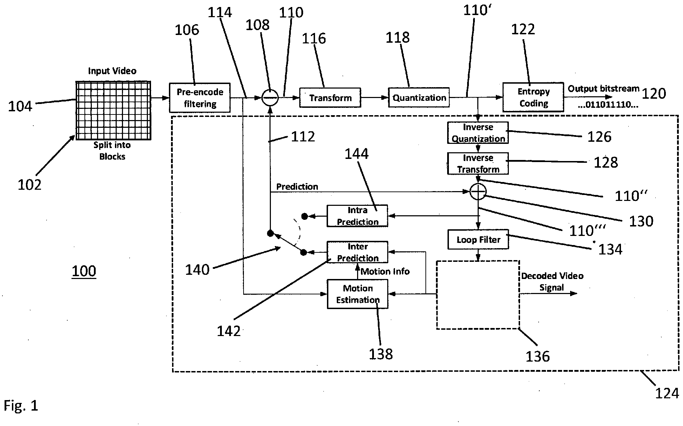

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

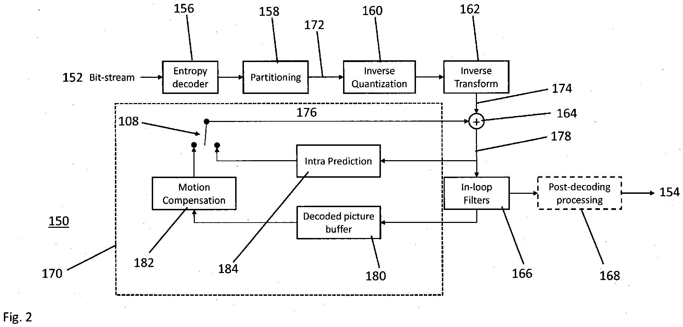

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

In the following a brief description of ECM and VVC/VTM tools, e.g., for chroma prediction is provided, which are described in more detail in the JVET-AG2025 and JVET-T2002 documents.

### Regular Intra Prediction Mode (RIPM)

A set of 67 Intra Prediction Modes (IPMs) exists both in VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

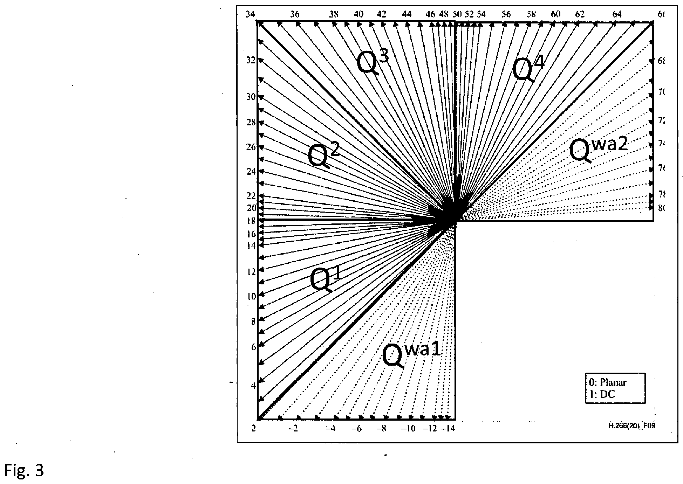

Fig 3 illustrates the 65 angular Intra Prediction Modes (IPMs) as well as the wide-angle modes in VVC and ECM. In Fig. 3, the solid lines (indexes) indicate non-wide-angle IPMs and the dashed lines (indexes) indicate wide-angle IPMS. As is show in Fig. 3, the non-wide-angle IPMs cover an angle range of between 45 degrees and 225 degrees, while the wide-angle IPMs extend their extremes by 45 degrees from each side. Furthermore, one can divide the set of IPMs into four non-wide-angle quadrants Q¹, Q², Q³ and Q⁴, as well as two wide-angle quadrants Q^{wa1} and Q^{wa2}.

In accordance with embodiments, a coding tool under consideration is the "Regular IPM" or RIPM in short. In VVC and ECM, typically a RIPM block is referred to an intra block coded by one of the 67 IPM, including the 65 angular modes in 4 quadrants shown in Fig. 3 as well as the two non-angular modes of DC and Planar. In this disclosure RIPM refers to one of the 67 IPM.

### Wide-Angle Intra Prediction WAIP

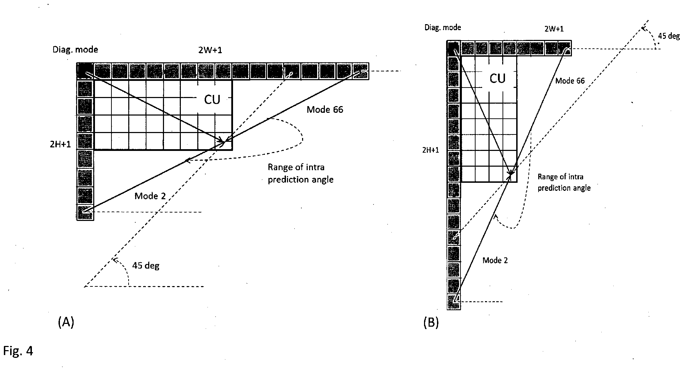

As illustrated in Fig. 3, each angular IPM is mapped to or is associated with an intra angle or angular intra prediction direction. Conventionally, angular intra prediction directions for the non-wide-angle IPMs (IPMs 2 to 66 in Fig. 3) are defined from -135 degrees (225° in Fig. 3) to +45 degrees (45° in Fig. 3) in a clockwise direction. Fig. 3 illustrates the IPM 66 which extends from a horizontal reference line above the currently processed block and is rotated downwards by -135 degrees relative to the horizontal reference line in the clockwise direction so as to extend from the horizontal reference line above the currently processed block towards the pixel to be predicted. Fig. 3 illustrates the IPM 2, which extends from a vertical reference line left the currently processed block and is rotated downwards by +45 degrees relative to the vertical reference line in the clockwise direction so as to extend from the vertical reference line left of the currently processed block towards the pixel to be predicted. In VVC, several conventional angular intra prediction modes may be adaptively replaced with wide-angle intra prediction modes for non-square blocks. The replaced modes are signaled using the original mode indices, which are remapped to the indices of the wide angular modes after parsing. The total number of intra prediction modes is unchanged, i.e., remain at 67, and the intra mode coding method remains also unchanged. Fig. 4(A) and Fig. 4(B) illustrate the reference samples or blocks for a wide-angular intra prediction of a currently processed block CU having a width W and a height H. To support these prediction directions, the top reference line having a length of 2W+1, and the left reference having a length of 2H+1 are defined as shown in Fig. 4(A) for a block CU having an aspect ratio W/H=1/2 and in Fig. 4(B) for a block CU having an aspect ratio W/H=2/1. Thus, the number of replaced modes in wide-angular direction mode depends on the aspect ratio of the block CU. Table 3 below illustrates replaced intra prediction modes dependent of the aspect ratio.

| Aspect ratio | Replaced intra prediction modes |
|---|---|
| W / H == 16 | Modes 2,3,4,5,6,7,8,9,10,11,12, 13,14,15 |
| W / H == 8 | Modes 2,3,4,5,6,7,8,9,10,11,12, 13 |
| W / H == 4 | Modes 2,3,4,5,6,7,8,9,10,11 |
| W / H == 2 | Modes 2,3,4,5,6,7,8,9 |
| W / H == 1 | None |
| W / H == 1/2 | Modes 59,60,61,62,63,64,65,66 |
| W / H == 1/4 | Mode 57,58,59,60,61,62,63,64,65,66 |
| W / H == 1/8 | Modes 55, 56,57,58,59,60,61,62,63,64,65,66 |
| W/H==1/16 | Modes 53, 54, 55, 56,57,58,59,60,61,62,63,64,65,66 |

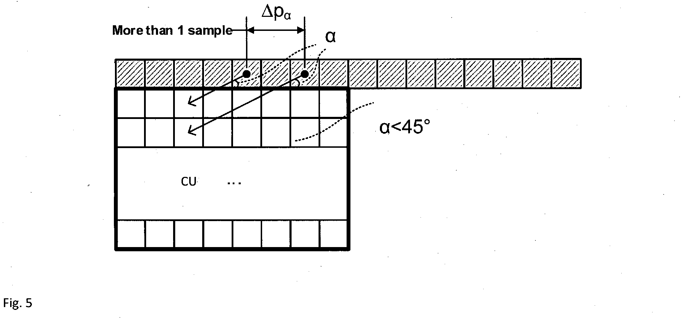

As shown in Fig. 5, which illustrates a problem of discontinuity in case of angular intra prediction directions beyond 45°, two vertically-adjacent predicted samples may use two non-adjacent reference samples in case of a wide-angle intra prediction. Hence, low-pass reference samples filter and side smoothing are applied to the wide-angle prediction to reduce the negative effect of the increased gap Δp_{α}. If a wide-angle mode represents a non-fractional offset, there are 8 modes in the wide-angle modes that satisfy this condition, which are [-14, -12, -10, -6, 72, 76, 78, 80] (see the indices in Fig. 3). When a block is predicted by these modes, the samples in the reference buffer are directly copied without applying any interpolation. With this modification, the number of samples that need smoothing is reduced. Besides, it aligns the design of non-fractional modes in the conventional prediction modes and wide-angle modes.

In VVC, 4:2:2 and 4:4:4 chroma formats are supported as well as 4:2:0. A chroma derived mode (DM) derivation table for the 4:2:2 chroma format was initially ported from HEVC extending the number of entries from 35 to 67 to align with the extension of intra prediction modes. Since the HEVC specification does not support a prediction angle below -135 degree (IPMs -2 ...) and above 45 degree (IPMs 66...), the luma intra prediction modes ranging from 2 to 5 are mapped to 2. Therefore the chroma DM derivation table for the 4:2:2 chroma format is updated by replacing some values of the entries of the mapping table to convert the prediction angle more precisely for the chroma blocks.

### Matrix-based position-dependent prediction (MPDP) replacing existing conventional intra modes in ECM

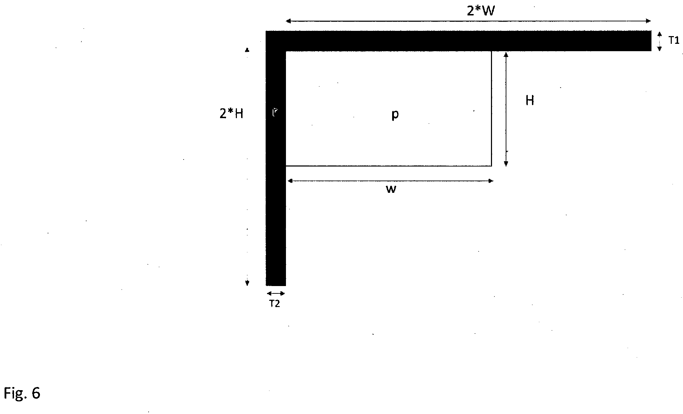

An alternative angular IPM prediction is Matrix-based Position-Dependent Prediction (MPDP), also referred to as Position-Dependent Prediction (PDP). A matrix of weights, which are defined for a block shape and intra mode, is introduced in JVET-AH0209. Those weights are multiplied by the neighbor reference template to derive the prediction samples replacing conventional intra prediction. The weights are applied to the reference samples of the L shaped causal neighborhood template as shown in Fig. 6 illustrating a L shaped neighborhood for a given predicted block.

The reference samples in the causal neighborhood are denoted as r, and F(x,y) is the matrix of weights. Then the prediction P(x,y) can be derived as $P \left(x, y\right) = {\sum }_{k} F \left(x, y, k\right) * r \left(k\right) ,$ where k denotes the index of the reference sample in the template.

This prediction is used for block sizes with both width and height up to 32 (except for 4x32,32x4, 8x32 and 32x8). The template size is 2 for blocks with both width and height up to 16 and it is only used for mode 0, 1, and (2+2*n) where n is from 0 to 32. For other blocks, the template size is set to 1 and is used for mode 0, 1, and (2+4*n). The prediction is only performed for 16x16 positions, and the rest of the samples are generated by bilinear interpolation. For all block sizes, the block shape and the mode-based symmetry is used. A reference length is set to W and H for modes greater than 18 and less than 50 and set to 2*W and 2*H otherwise.

### Decoder side intra mode derivation (DIMD)

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination $Orient = {G}_{y} / {G}_{x}$ is obtained, e.g., computed by the following LUT-based scheme: $x = Floor \left(Log2\left(Gx\right)\right)$ $normDiff = \left(\left(Gx≪4\right)≫x\right) & 15$ $x + = \left(3+\left(normDiff !=0\right) ? 1 : 0\right)$ $Orient = \left(Gy*\left(DivSigTable\left[normDiff\right]\left|8\right.\right)+\left(1≪\left(x-1\right)\right)\right) ≫ x$ where DivSigTable[16] = { 0, 7, 6, 5 ,5, 4, 4, 3, 3, 2, 2, 1, 1, 1, 1, 0 }.

For a block of size *W* × *H,* the weight for each of the five derived modes is modified if one of the above or left histogram magnitudes is twice as large as the other one. In this case, the weights are location dependent and computed as follows:
If the above histogram is twice the left, then: ${w}_{i} \left(x, y\right) = {wDimd}_{i} + {Δ}_{i} - 2 {Δ}_{i} \frac{y}{\left(H-1\right)} .$
If the left histogram is twice the above, then: ${w}_{i} \left(x, y\right) = {wDimd}_{i} + {Δ}_{i} - 2 {Δ}_{i} \frac{x}{\left(W-1\right)} ,$ where *wDimdᵢ* is the unmodified uniform weight of the DIMD selected as in JVET-O0449, Δ*ᵢ* is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, it is noted note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

### Fusion for template-based intra mode derivation (TIMD)

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e., DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:
- The non-angular intra prediction mode is different from the two selected intra prediction modes.
- costMode3 < 1.5*costModel, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$ Otherwise, the non-angular intra prediction mode is not used in the prediction.

The costs of the two selected modes are compared with a threshold, and the cost factor of 2 may be applied as follows: $costMode 2 < 2 * costMode 1 .$ If this condition is true, the fusion is applied, otherwise only mode1 is used.

The weights of the modes are computed from their SATD costs as follows: $weight 1 = costMode 2 / \left(costMode1+costMode2\right)$ $weight 2 = 1 - weight 1$

The division operations are conducted using the same lookup table (LUT) based integerization scheme used by the CCLM.

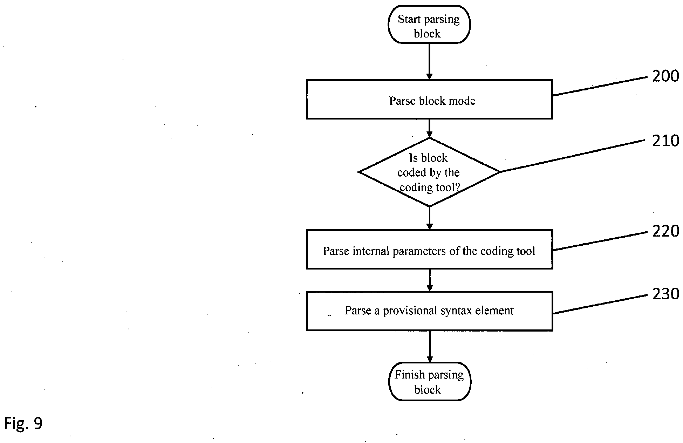

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 9 illustrating the TIMD templates for the cost determination or calculation.

As described above, in conventional codec architectures, the decoding process is typically divided into a parsing phase and a sample reconstruction phase in order to enable parallel execution. However, it has been found that in practice, parsing dependencies may arise when the parsing of certain syntax elements requires access to reconstructed sample data. Such dependencies create a sequential bottleneck, as the parsing must wait for reconstruction to complete, which defeats the purpose of parallelizing these phases. Consequently, decoding complexity and processing latency increase, particularly in realtime or high-resolution applications.

In other words, state-of-the-art parallelization involves parsing dependencies, which limit the independence between parser and reconstructor, which may restrict efficient pipeline design and hinder parallel decoding across independently decodable regions such as slices or tiles. Furthermore, parsing dependencies may impact coding efficiency by forcing the signaling of syntax elements whose relevance cannot yet be verified at the time of parsing. For instance, if the applicability of a coding tool's internal functionality depends on the reconstructed signal, syntax elements for such functionality might be signaled even in blocks where the functionality does not apply-leading to wasted bitrate.

For addressing these shortcomings, it has been found that, for a current block with the capacity of repurposing a provisional syntax element, if during the reconstruction phase the initial purpose of the syntax element turns out to be not applicable for the current block, repurposing the provisional syntax element to an alternative purpose addresses the limitations parsing dependencies impose on prior parallelization approaches. Therefore, in accordance with embodiments, the provisional syntax element is parsed and used to control an internal functionality of a coding tool, and otherwise, if that internal functionality is not applicable to the current block, repurposed to control another internal functionality of the coding tool. Thus the bitrate covering the syntax element is not going to be wasted due to the syntax element being not used.

Embodiments of the present disclosure propose a new paradigm in adding internal functionality to existing intra coding tools in a video codec. That is, an existing intra coding tool is first proposed to include a new functionality that is controlled by an explicitly signaled syntax element. Then, the second aspect (the inventive aspect) proposes to design the explicit syntax element in a flexible manner, so it can be re-purposed in case of nonapplicability.

Embodiments of the present disclosure are advantageous as signaling and/or parsing the provisional syntax element is not wasted or less often wasted, if the initial purpose of the syntax element turns out to be non-applicable to the current block during the reconstruction phase.

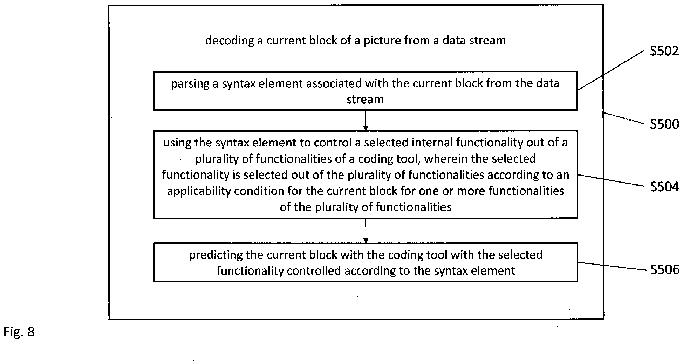

Fig. 8 illustrates a flow diagram of an embodiment of a method for decoding one or more blocks of a picture. The method includes:

| | |
|---|---|
| S500: | decoding a current block of a picture from a data stream; |
| S502: | parsing a syntax element associated with the current block from the data stream; |
| S504 | using the syntax element to control a selected internal functionality out of a plurality of functionalities of a coding tool, wherein the selected functionality is selected out of the plurality of functionalities according to an applicability condition for the current block for one or more functionalities of the plurality of functionalities, and |
| S506: | predicting the current block with the coding tool with the selected functionality controlled according to the syntax element. |

In accordance with embodiments, a method is proposed to explicitly signal a syntax element when a certain intra coding tool is enabled. This syntax element, referred to as provisional syntax element, is designed to possibly control different internal functionalities for the given intra coding tool. However, the exact functionality that is controlled by the provisional syntax element is determined at the phase of sample reconstruction, rather than the parsing phase.

In accordance with embodiments, the determination of controlled functionality by the provisional flag is carried out using a set of at least two pre-defined applicability conditions. In this embodiment, the applicability of the pre-defined functionalities is assessed given a pre-defined order, and the first functionality that is assessed to be applicable is associated to the provisional syntax element.

In accordance with embodiments, the pre-defined functionalities are considered only if the value of the provisional syntax element is parsed to be non-zero, or certain other value.

In accordance with embodiments, at least one of the pre-defined applicabilities cannot be assessed at the phase of the parsing, due to the need for computation on at least one reconstructed sample.

In the present disclosure different embodiments are provided. A method covering some or all of these embodiments may comprise one or more of the following:
- an intra coding tool has one certain internal functionality, which may be referred to as an intended functionality;
- a usage of the intended functionality can be adjusted, for example the adjustment comprises enabling or disabling that functionality for the current block;
- the intended functionality is associated with an applicability condition, which is fulfilled only to a subset of blocks coded by the coding tool;
- the applicability condition of a given block for the functionality cannot be determined at the parsing phase, for example the applicability condition can only be determined at the sample reconstruction phase;
- a provisional syntax element is signaled for the current block.
- if the applicability condition of the intended functionality is met for the current block, then the provisional syntax element will serve to control the adjustment of the intended functionality, e.g., enable/disable;
- otherwise (if the intended functionality is not applicable), then the provisional syntax element is repurposed to control a fallback functionality for the block.

In another embodiment of the present disclosure the method can have more than one fallback functionality. For example, in a setting with one intended functionality and two fallback functionalities, at least two applicability conditions should be considered, one for the intended functionality and the other one for the first fallback functionality. In this embodiment, the provisional syntax element is firstly considered for the intended functionality. If it the applicability condition for the intended functionality is not met, then the applicability condition for the first fallback functionality is evaluated. If the applicability condition for the first fallback functionality is met, the provisional syntax element is used for controlling the first fallback functionality, otherwise, if the applicability condition for the first fallback functionality not met, the provisional syntax element is used to control the second fallback functionality. This process can continue for several fallback functionalities until either an applicability condition for a fallback functionality is met, or no more fallback functionalities are considered, in which case, the provisional syntax element is not going to be used for the block. In that case a waste of bitrate is exhibited, however the waste occurs less often than in the state-of-the-art.

Fig. 9 illustrates a method for parsing a block or current block in accordance with embodiments of the present disclosure. The method comprises parsing 200 a mode of the block and evaluating 210, if the block is coded with a certain coding tool. If the block is coded with the coding tool, internal parameters of the coding tool are parsed 220. Finally a provisional syntax element is parsed 230.

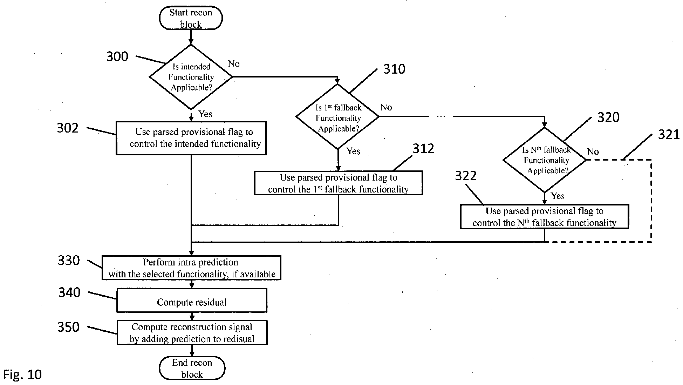

Fig. 10 illustrates a method for decoding a block. The block may have been parsed with the method illustrated in Fig. 9. The method shown in Fig. 10 comprises a number of N fallback functionalities. In this embodiment, the provisional syntax element is firstly considered for the intended functionality, and subsequently for the remaining N fallback functionalities according to a predefined order. That means that if the applicability condition for the indented functionality is evaluated 300 as not being met, the applicability condition of a first fallback functionality -according to the predefined order-is evaluated 310, continuing until the applicability condition for the last fallback functionality is evaluated 320. The first identified functionality, whose applicability condition is met, is selected to be controlled by the syntax element 302, 312, 322. Further evaluation of applicability conditions may stop after the selected functionality is identified or after there are no more fallback functionalities to be considered, in which case, no functionality is selected and the provisional syntax element is not going to be used for the block. Intra prediction of the block is performed 330 with the coding tool with the selected functionality, controlled according to the syntax element, or if no functionality is selected 321, without any of the N functionalities. Note that in the presented embodiments, a case where none of the applicability conditions of the intended and N fallback functionalities is fulfilled (i.e. dashed line at 321 in Fig. 10) is optional. That said, one can design embodiments where at least one of the indented or N fallback functionalities is always applicable. For example, the applicability condition may comprise, that none of the previously evaluated applicability conditions, is met. The method further comprises computing 340 the residual signal and computing 350 the reconstruction signal by adding the prediction signal to the residual signal.

In accordance with a related embodiment, a last fallback functionality according to the predefined order is not associated with an applicability condition. In this embodiment, if the applicability conditions of all the preceding fallback functionalities according to the predefined order are not met, the syntax element is used to control the last fallback functionality, without evaluation of an applicability condition. In this scenario prediction of the block is performed with the coding tool with the last fallback functionality.

In one embodiment of the present disclosure, the coding tool under consideration is the "Regular IPM" or RIPM in short and PDP is used as an alternative angular IPM prediction method that uses pre-trained matrices for each applicable angle. As of ECM-16.1, the PDP design only allows application on even and angular IPM indexes and certain block sizes. That is, non-eligible IPM indexes and block sizes keep using the regular angular IPMs as in VVC. ECM (and possibly other codecs) are designed with potential parsing dependencies regarding the IPM. In other words, the choice of IPM is not necessarily known at the stage of parsing. As a result, one cannot easily dedicate syntax elements that are dependent to certain IPMs of the block. In this embodiment, the provisional syntax element is considered for RIPM, such that the syntax element can control different functionalities depending on their applicability. Below is the detail of this example, defining the description of the exemplary RIPM with provisional syntax element repurposing. In this example, the provisional syntax element is a binary flag, that is explicitly signaled for each RIPM block. This syntax element is then used to enable one of the below described functionalities, based on their applicability:
- an intended functionality comprises disabling PDP, and the associated applicability condition is, that the IPM is angular and its index is even and the block size meets the PDP requirement;
- a 1^{st} fallback functionality comprises disabling Wide-Angle Intra Prediction (WAIP), and the associated applicability condition is, that the intended functionality is not applicable, and moreover, the coded IPM is angular and is located either in the first or fourth quadrants (i.e. WAIP requirement);
- a 2^{nd} fallback functionality comprises a fusion with planar mode, and the associated applicability condition is, that none of the intended and 1^{st} fallback functionalities are applicable, and moreover, the coded IPM is not Planar;
- a 3^{rd} fallback functionality comprises a fusion with DC, and the associated applicability condition is, that none of the intended, 1^{st} and 2^{nd} fallback functionalities are applicable, and moreover, the coded IPM is not DC.

There exist certain types of textures that can be better predicted by RIPM that are non-PDP. The intended functionality and the fallback functionalities aim at enabling those RIPMs and thus improve efficiency.

As can be noted, the above embodiment involving the provisional syntax element covers all RIPM blocks. In other words, a provisional syntax element for RIPM is eventually re-purposed to one of the four functionalities, therefore, its rate is never going to be wasted due to an unused provisional flag. In other words, the embodiment may be designed, such that one of the four functionalities is always applicable and the provisional flag is used to control that functionality.

Another embodiment of the present disclosure proposes, that the repurposing of the provisional syntax element is based on DIMD as a coding tool. In ECM, DIMD picks up to 6 IPMs and applies a fusion of them. Typically, one of the IPMs is always Planar to smoothen natural content texture. However, the other fusion IPMs are computed from the template around the DIMD block, by applying Sobel texture analysis and computing a Histogram of Gradient (HoG) corresponding to angles of available angular IPMs. The design of DIMD naturally imposes parsing dependency, since most of the fusion modes representing the actual texture are available only at the stage of sample reconstruction, and not at the parsing stage. Therefore, designing control syntax elements for DIMD is not straightforward if the control turns out non-applicable later on, when the fusion IPMs are derived from the texture. This embodiment proposes to dedicate a provisional syntax element for DIMD that potentially controls several functionalities, based on their applicability. In this embodiment, the provisional syntax element is a binary flag and is signaled for each DIMD block. This provisional syntax element is then used to enable to one of the two following functionalities defined, based on their applicability:
- intended functionality comprises disabling fusion and using only the primary IPM, e.g., an IPM with a maximum Histogram of Gradients (HoG) entry, and the associated applicability condition is, that the maximum HoG amplitude exceeds a certain fraction, for example 90%, of the sum of amplitudes of the HoG;
- 1st fallback functionality comprises reducing a number of fusions to only three IPMs, i.e., 2 angular IPMs and Planar, and the associated applicability condition is, that the intended functionality is not applicable, and moreover, the two largest HoG amplitudes exceed a predetermined fraction, for example 90%, of the maximum HoG amplitude.

Although prediction fusion typically helps improving coding efficiency by smoothening natural content, there are various conditions where, absent of fusion (i.e. single prediction by primary IPM) is more beneficial due to sharp texture such as in SCC or SCC-like content. Disabling fusion or reducing the number of IPMs to be fused may then improve coding efficiency.

As can be noted, the above embodiment does not cover all DIMD blocks. In a related embodiment, there could be some DIMD blocks where none of the intended and 1st fallback functionalities are applicable, in which case, the provisional syntax element is not going to be used (i.e. rate wasted).

Another embodiment of the present disclosure proposes a method, where the intra coding tools of DIMD and TIMD interact to borrow each-other's internal functionality. Like previous embodiments, a provisional syntax element (i.e. a binary flag in particular) is proposed to be explicitly signaled for each DIMD block. If the value of the provisional flag is 1, one of the intended or 1st fallback functionalities is are enabled, depending to their applicability. In this embodiment the coding tool is DIMD, which comprises following functionalities:
- an intended functionality comprises selecting fusion IPMs of DIMD by applying TIMD's template cost, and the and the associated applicability condition is, that a number m, for example 10, of the highest HoG amplitudes exceed a fraction of the maximum HoG amplitude;
- a 1st fallback functionality comprises selecting IPMs corresponding to the two largest HoG amplitudes and change the coding mode of the block to TIMD, which means that the block is treated as a TIMD block, applying all its internal aspects such as possibility of extra-precision angle refinement, specific reference line fusion etc., and the associated applicability condition is, that the intended functionality is not applicable.

When selecting the intended functionality, one can conclude that the HoG computation has failed to find dominant IPMs from the template to use as fusion IPMs. Therefore, TIMD's template computation which is typically more accurate is proposed to select the fusion IPMs.

Whereas when selecting the fallback functionality, one can conclude that the HoG computation has succeeded in finding dominant fusion IPMs. In this case, one can convert the block into a TIMD block that has specific features, as mentioned above.

### Encoding Method

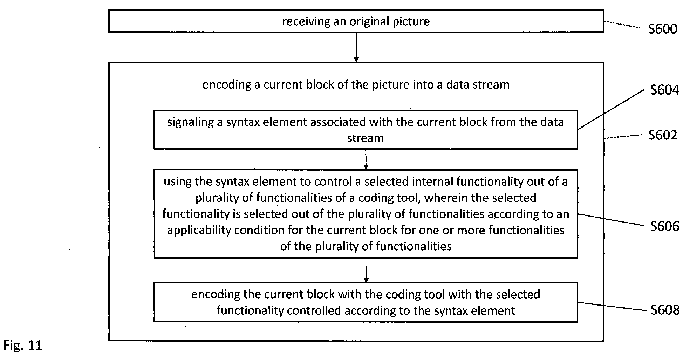

Fig. 11 illustrates a flow diagram of a method for encoding a picture into an encoded data stream. The encoded data stream includes data representing the picture and the method includes the following:

| | |
|---|---|
| S600: | Receiving an original picture. |
| S602: | Encoding a current block of the picture into a data stream. |
| S604: | Signaling a syntax element associated with the current block from the data stream. |
| S606: | Using the syntax element to control a selected internal functionality out of a plurality of functionalities of a coding tool, wherein the selected functionality is selected out of the plurality of functionalities according to an applicability condition for the current block for one or more functionalities of the plurality of functionalities. |
| S608: | Encoding the current block with the coding tool with the selected functionality controlled according to the syntax element. |

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

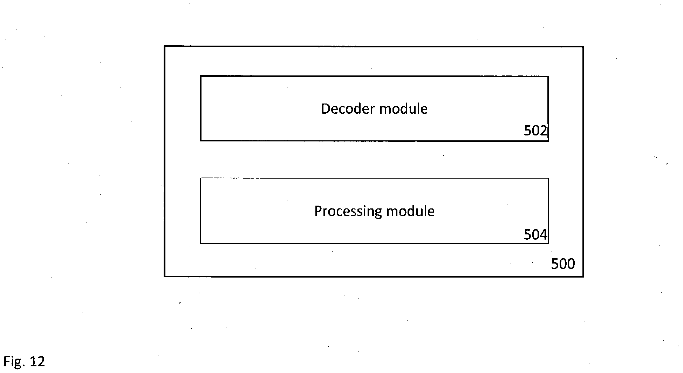

Fig. 12 illustrates a block diagram of an apparatus 500 for decoding a current block of a picture from a data stream in accordance with embodiments of the present disclosure. The encoded data stream includes data representing the picture. The decoder 500 includes the following modules:

| | |
|---|---|
| 502: | A decoder module configured to decode a current block from the encoded data stream the picture. |
| 504: | A processing module, e.g., a prediction module 170 as depicted in Fig. 2. The processing module 502 is configured to operate in accordance with embodiments of the present disclosure. For example, the processing module 502 is configured to perform a method in accordance with embodiments of the present disclosure. |

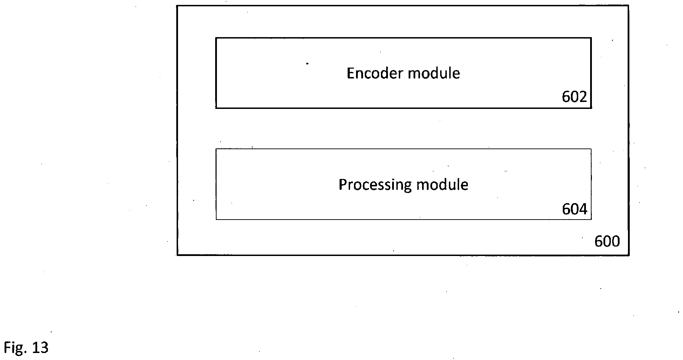

Fig. 13 illustrates a block diagram of an apparatus 600 for encoding a current block of a picture from a data stream in accordance with embodiments of the present disclosure. The encoded data stream includes data representing the picture. The encoder 600 includes the following modules:

| | |
|---|---|
| 602: | An encoder module configured to receive the original picture and to encode the picture into the encoded data stream. |
| 604: | A processing module, e.g., a prediction module 124 as depicted in Fig. 1. The processing module 602 is configured to operate in accordance with embodiments of the present disclosure. For example, the processing module 502 is configured to perform a method for encoding a current block of a picture in accordance with embodiments of the present disclosure. |

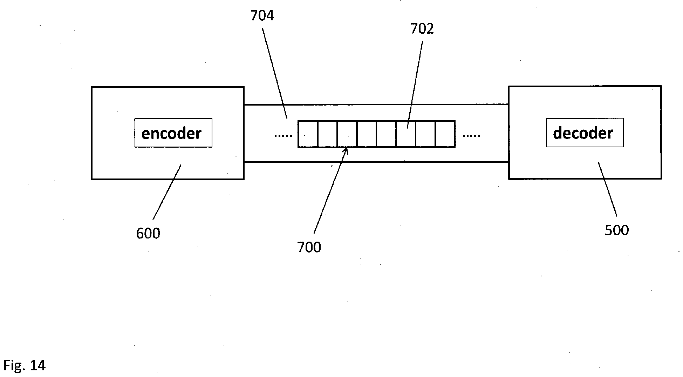

Fig. 14 illustrates a data stream 700 in accordance with embodiments of the present disclosure, which has encoded there into a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating, for a prediction of a block of the picture using a fusion-based prediction process, which configuration of a plurality of configurations is to be used for one or more fusion-based prediction processes, wherein each configuration of the plurality of configurations employs a different number of prediction modes to be fused.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

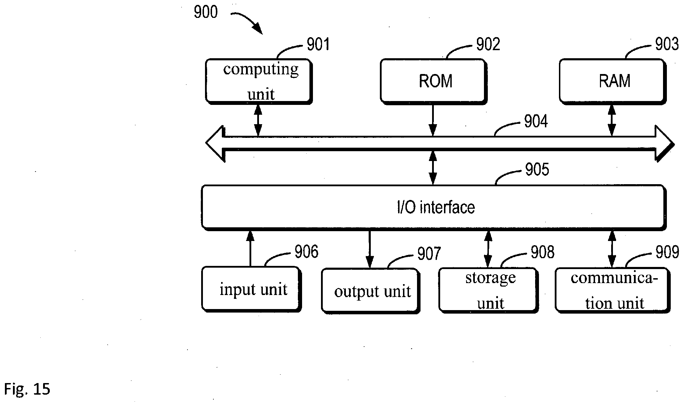

Fig. 15 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:

A 1^{st} embodiment provides a method for decoding a current block of a picture from a data stream, the method comprising:
- parsing a syntax element associated with the current block from the data stream,
- using the syntax element to control a selected internal functionality out of a plurality of functionalities of a coding tool,
   wherein the selected functionality is selected out of the plurality of functionalities according to an applicability condition for the current block for one or more functionalities of the plurality of functionalities,
   wherein, for at least one functionality, the applicability condition depends on at least one reconstruction sample as reconstructible from a previous portion of the data stream, and
- predicting the current block with the coding tool with the selected functionality controlled according to the syntax element.

A 2^{nd} embodiment provides the method according to the 1^{st} embodiment, wherein the plurality of functionalities comprise at least two functionalities, an intended functionality and at least one fallback functionality.

A 3^{rd} embodiment provides the method according to the 2^{nd} embodiment, wherein the syntax element is used to control the intended functionality of the coding tool, in case the applicability condition for the current block is fulfilled for the intended functionality.

A 4^{th} embodiment provides the method according to the 2^{nd} or 3^{rd} embodiment, wherein, in case the applicability condition for the current block is not fulfilled for the intended functionality, the syntax element is repurposed to control the at least one fallback functionality of the coding tool.

A 5^{th} embodiment provides the method according to the 1^{st} embodiment, wherein the plurality of functionalities are evaluated according to a predefined order with respect to the applicability condition for the current block, until at least one functionality for which the applicability condition is firstly fulfilled, is selected, or at least until a - in the predefined order - pen-ultimate functionality, for which the applicability condition is still not fulfilled, whereupon the - in the predefined order - last functionality is selected.

A 6^{th} embodiment provides the method according to one of the 1^{st} to 5^{th} embodiment, comprising, depending on a parsed value of the syntax element having a predetermined value, predicting the current block with the coding tool with none of the functionalities, without performing an evaluation on the applicability condition for the current block for one or more functionalities of the plurality of functionalities, or
performing an evaluation on the applicability condition for the current block for one or more functionalities of the plurality of functionalities and predicting the current block with the coding tool with the selected functionality controlled according to the syntax element, with performing an evaluation on the applicability condition for the current block for one or more functionalities of the plurality of functionalities.

A 7^{th} embodiment provides the method according to one of the 1st to 6^{th} embodiments, wherein controlling the selected functionality involves selectively enabling or disabling the selected functionality for the current block and/or adjusting a parameter of the selected functionality.

An 8^{th} embodiment provides the method according to one of the 1st to 7^{th} embodiments, wherein, for each functionality out of the plurality of functionalities or for each except one of the plurality of functionalities, one corresponding applicability condition is defined.

An 9^{th} embodiment provides the method according to one of the 1st to 8^{th} embodiments, wherein the coding tool is one of the following:
- Intra Prediction Tool,
- Intra Prediction Tool in a Regular Intra Prediction Mode (RIPM),
- Decoder-side Intra Mode Derivation (DIMD) tool, or
- Template-based Intra Mode Derivation (TIMD) tool.

A 10^{th} embodiment provides the method according to one of the 1st to 9^{th} embodiments, wherein the plurality of functionalities comprises one or more of the following:
- a usage of Position-Dependent Prediction (PDP),
- a usage of Wide-Angle Intra Prediction (WAIP),
- a fusion of Intra Prediction Modes (IPM).

An 11^{th} embodiment provides the method according to one of the 1st to 10^{th} embodiments, wherein the syntax element is conditionally parsed, depending on whether the current block is coded with said coding tool.

A 12^{th} embodiment provides the method according to one of the 1st to 11^{th} embodiments, wherein the syntax element comprises a binary value or an n-ary value.

A 13^{th} embodiment provides the method according to one of the 1st to 12^{th} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
vii) the usage of PDP, and the associated applicability condition of the usage of PDP comprises that an IPM index of the current block corresponds to the angular IPM and the IPM index of the IPM is even;
viii) the usage of WAIP, and the associated applicability condition of the usage of WAIP comprises that an IPM index of the current block corresponds to the angular IPM and the index is located in the first or fourth quadrant;
ix) a fusion of the IPM for the current block with the Planar Mode, and the associated applicability condition of the fusion with the Planar Mode comprises that the current block is not coded with Planar; and/or
x) a fusion of the IPM for the current block with DC Mode, and the associated applicability condition of the fusion with the DC Mode comprises that the current block is not coded with DC.

A 14^{th} embodiment provides the method according to one of the 1st to 13^{th} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the fusion of IPM modes comprises one or more of the following:
- switching between using only one IPM and fusing more than one IPM,
- setting a number of IPM modes to be fused,
- selecting one out of more than one inference modes for inferring the IPM modes to be fused based on an already reconstructed neighbourhood of the current block,
- adjusting fusion weights for varying the fusion between the IPM modes over the current block.

A 15^{th} embodiment provides the method according to one of the 1st to 14t^{h} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
xi) the switching between using only one IPM and fusing more than one IPM and/or setting a number of IPM modes to be fused, whose associated applicability condition comprises that a sum of n largest HoG amplitudes exceeds a predetermined fraction of a sum over all HoG, wherein n >=1; and/or
xii) selecting one out of more than one inference modes for inferring the IPM modes to be fused based on an already reconstructed neighbourhood of the current block, and the associated applicability condition comprises that the m largest HoG amplitudes exceed a predetermined fraction of the maximum HoG amplitude and/or fall within a defined range, wherein m>=1.

A 16^{th} embodiment provides the method according to one of the 1st to 15^{th} embodiments, Method for encoding a current block of a picture into a data stream, the method comprising:
- signalling a syntax element associated with the current block into the data stream,
- using the syntax element to control a selected internal functionality out of a plurality of functionalities of a coding tool,
   wherein the selected functionality is selected out of the plurality of functionalities according to an applicability condition for the current block for one or more functionalities of the plurality of functionalities,
- encoding the current block by predicting the current block with the coding tool with
   the selected functionality controlled according to the syntax element.
For example, for at least one functionality, the applicability condition may depend on at least one reconstruction sample as reconstructible from a previous portion of the data stream. The at least one reconstruction sample may be derived in a prediction loop involved in the encoding of the picture into the data stream.

A 17^{th} embodiment provides the method according the 16^{th} embodiment, wherein the plurality of functionalities comprise at least two functionalities, an intended functionality and at least one fallback functionality.

An 18^{th} embodiment provides the method according to the 17^{th} embodiment, wherein the syntax element is used to control the intended functionality of the coding tool, in case the applicability condition for the current block is fulfilled for the intended functionality.

A 19^{th} embodiment provides the method according to one of the 17^{th} or 18^{th} embodiments, wherein, in case the applicability condition for the current block is not fulfilled for the intended functionality, the syntax element is repurposed to control the at least one fallback functionality of the coding tool.

A 20^{th} embodiment provides the method according to the 16^{th} embodiment, wherein the plurality of functionalities are evaluated according to a predefined order with respect to the applicability condition for the current block, until at least one functionality for which the applicability condition is firstly fulfilled, is selected, or at least until a - in the predefined order - pen-ultimate functionality, for which the applicability condition is still not fulfilled, whereupon the - in the predefined order - last functionality is selected.

A 21^{st} embodiment provides the method according to one of the 16^{th} to 20^{th} embodiments, wherein controlling the selected functionality involves selectively enabling or disabling the selected functionality for the current block, and/or adjusting a parameter of the selected functionality.

A 22^{nd} embodiment provides the method according to one of the 16^{th} to 21^{st} embodiments, wherein, for each functionality out of the plurality of functionalities or for each except one of the plurality of functionalities, one corresponding applicability condition is defined.

A 23^{rd} embodiment provides the method according to one of the 16^{th} to 22^{nd} embodiments, wherein the coding tool is one of the following:
- Intra Prediction Tool,
- Intra Prediction Tool in a Regular Intra Prediction Mode (RIPM),
- Decoder-side Intra Mode Derivation (DIMD) tool, or
- Template-based Intra Mode Derivation (TIMD) tool.

A 24^{th} embodiment provides the method according to one of the 16^{th} to 23^{rd} embodiments, wherein the plurality of functionalities comprises one or more of the following:
- a usage of Position-Dependent Prediction (PDP),
- a usage of Wide-Angle Intra Prediction (WAIP),
- a fusion of Intra Prediction Modes (IPM).

A 25^{th} embodiment provides the method according to one of the 16^{th} to 24^{th} embodiments, wherein the syntax element comprises a binary value or an n-ary value

A 26^{th} embodiment provides the method according to one of the 16^{th} to 25^{th} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
i) the usage of PDP, and the associated applicability condition of the usage of PDP comprises that an IPM index of the current block corresponds to the angular IPM and the IPM index of the IPM is even;
ii) the usage of WAIP, and the associated applicability condition of the usage of WAIP comprises that an IPM index of the current block corresponds to the angular IPM and the index is located in the first or fourth quadrant;
iii) a fusion of the IPM for the current block with the Planar Mode, and the associated applicability condition of the fusion with the Planar Mode comprises that the current block is not coded with Planar; and/or
iv) a fusion of the IPM for the current block with DC Mode, and the associated applicability condition of the fusion with the DC Mode comprises that the current block is not coded with DC.

A 27^{th} embodiment provides the method according to one of the 16^{th} to 26^{th} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the fusion of IPM modes comprises one or more of the following:
- switching between using only one IPM and fusing more than one IPM,
- setting a number of IPM modes to be fused,
- selecting one out of more than one inference modes for inferring the IPM modes to be fused based on an already reconstructed neighbourhood of the current block,
- adjusting fusion weights for varying the fusion between the IPM modes over the current block.

A 28^{th} embodiment provides the method according to one of the 16^{th} to 27^{th} embodiments, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected,
wherein the plurality of functionalities comprises
i) the switching between using only one IPM and fusing more than one IPM and/or setting a number of IPM modes to be fused, whose associated applicability condition comprises that a sum of n largest HoG amplitudes exceeds a predetermined fraction of a sum over all HoG, wherein n >=1; and/or
ii) selecting one out of more than one inference modes for inferring the IPM modes to be fused based on an already reconstructed neighbourhood of the current block, and the associated applicability condition comprises that the m largest HoG amplitudes exceed a predetermined fraction of the maximum HoG amplitude and/or fall within a defined range, wherein m>=1.

A 29^{th} embodiment provides an apparatus for decoding a current block of a picture from a data stream, the apparatus configured to
- parse a syntax element associated with the current block from the data stream,
- using the syntax element to control a selected internal functionality out of a plurality of functionalities of a coding tool, wherein the selected functionality is selected out of the plurality of functionalities according to an applicability condition for the current block for one or more functionalities of the plurality of functionalities, wherein, for at least one functionality, the applicability condition depends on at least one reconstruction sample as reconstructible from a previous portion of the data stream, and
- predict the current block with the coding tool with the selected functionality controlled according to the syntax element.

A 30^{th} embodiment provides an apparatus for encoding a current block of a picture from a data stream, the apparatus configured to
- signal a syntax element associated with the current block into the data stream,
- use the syntax element to control a selected internal functionality out of a plurality of functionalities of a coding tool,
   wherein the selected functionality is selected out of the plurality of functionalities according to an applicability condition for the current block for one or more functionalities of the plurality of functionalities,
- encode the current block with the coding tool with the selected functionality controlled according to the syntax element.
For example, for at least one functionality, the applicability condition may depend on at least one reconstruction sample as reconstructible from a previous portion of the data stream. The at least one reconstruction sample may be derived in a prediction loop involved in the encoding of the picture into the data stream.

A 31^{st} embodiment provides a data stream having encoded thereinto a current block of a picture, wherein the current block is encoded using a method according to any of the 16^{th} to 28^{th} embodiments.

A 32^{nd} embodiment provides a non-transitory digital storage medium having a computer program stored thereon to perform the method according to any of the 1^{st} to 28^{th} embodiments when said computer program is run by a computer.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. Method for decoding a current block of a picture from a data stream, the method comprising:
- parsing a syntax element associated with the current block from the data stream,
- using the syntax element to control a selected internal functionality out of a plurality of functionalities of a coding tool,
wherein the selected functionality is selected out of the plurality of functionalities according to an applicability condition for the current block for one or more functionalities of the plurality of functionalities,
wherein, for at least one functionality, the applicability condition depends on at least one reconstruction sample as reconstructible from a previous portion of the data stream, and
- predicting the current block with the coding tool with the selected functionality controlled according to the syntax element.

2. Method of claim 1, wherein the plurality of functionalities comprise at least two functionalities, an intended functionality and at least one fallback functionality.

3. Method of claim 2, wherein the syntax element is used to control the intended functionality of the coding tool, in case the applicability condition for the current block is fulfilled for the intended functionality.

4. Method of any of the claims 2 or 3, wherein, in case the applicability condition for the current block is not fulfilled for the intended functionality, the syntax element is repurposed to control the at least one fallback functionality of the coding tool.

5. Method of claim 1, wherein the plurality of functionalities are evaluated according to a predefined order with respect to the applicability condition for the current block, until at least one functionality for which the applicability condition is firstly fulfilled, is selected, or at least until a - in the predefined order - pen-ultimate functionality, for which the applicability condition is still not fulfilled, whereupon the - in the predefined order - last functionality is selected.

6. Method of any of the preceding claims, wherein controlling the selected functionality involves selectively enabling or disabling the selected functionality for the current block and/or adjusting a parameter of the selected functionality.

7. Method any of the preceding claims, wherein the plurality of functionalities comprises one or more of the following:
- a usage of Position-Dependent Prediction (PDP),
- a usage of Wide-Angle Intra Prediction (WAIP),
- a fusion of Intra Prediction Modes (IPM).

8. Method of any of the preceding claims, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected, wherein the plurality of functionalities comprises
i) the usage of PDP, and the associated applicability condition of the usage of PDP comprises that an IPM index of the current block corresponds to the angular IPM and the IPM index of the IPM is even;
ii) the usage of WAIP, and the associated applicability condition of the usage of WAIP comprises that an IPM index of the current block corresponds to the angular IPM and the index is located in the first or fourth quadrant;
iii) a fusion of the IPM for the current block with the Planar Mode, and the associated applicability condition of the fusion with the Planar Mode comprises that the current block is not coded with Planar; and/or
iv) a fusion of the IPM for the current block with DC Mode, and the associated applicability condition of the fusion with the DC Mode comprises that the current block is not coded with DC.

9. Method of any of the preceding claims, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected, wherein the fusion of IPM modes comprises one or more of the following:
- switching between using only one IPM and fusing more than one IPM,
- setting a number of IPM modes to be fused,
- selecting one out of more than one inference modes for inferring the IPM modes to be fused based on an already reconstructed neighbourhood of the current block,
- adjusting fusion weights for varying the fusion between the IPM modes over the current block.

10. Method of any of the preceding claims, wherein the plurality of functionalities are evaluated according to a predefined order with respect to an associated applicability condition, until at least one functionality for which the associated applicability condition is firstly fulfilled, is selected, or at least until a - in the predefined order - pen-ultimate functionality, for which the associated applicability condition is still not fulfilled, whereupon the - in the predefined order - last functionality is selected, wherein the plurality of functionalities comprises
v) the switching between using only one IPM and fusing more than one IPM and/or setting a number of IPM modes to be fused, whose associated applicability condition comprises that a sum of n largest HoG amplitudes exceeds a predetermined fraction of a sum over all HoG, wherein n >=1; and/or
vi) selecting one out of more than one inference modes for inferring the IPM modes to be fused based on an already reconstructed neighbourhood of the current block, and the associated applicability condition comprises that the m largest HoG amplitudes exceed a predetermined fraction of the maximum HoG amplitude and/or fall within a defined range, wherein m>=1.

11. Method for encoding a current block of a picture into a data stream, the method comprising:
- signalling a syntax element associated with the current block into the data stream,
- using the syntax element to control a selected internal functionality out of a plurality of functionalities of a coding tool,
wherein the selected functionality is selected out of the plurality of functionalities according to an applicability condition for the current block for one or more functionalities of the plurality of functionalities,
- encoding the current block by predicting the current block with the coding tool with the selected functionality controlled according to the syntax element.

12. An apparatus for decoding a current block of a picture from a data stream, the apparatus configured to
- parse a syntax element associated with the current block from the data stream,
- using the syntax element to control a selected internal functionality out of a plurality of functionalities of a coding tool,
wherein the selected functionality is selected out of the plurality of functionalities according to an applicability condition for the current block for one or more functionalities of the plurality of functionalities,
wherein, for at least one functionality, the applicability condition depends on at least one reconstruction sample as reconstructible from a previous portion of the data stream, and
- predict the current block with the coding tool with the selected functionality controlled according to the syntax element.

13. An apparatus for encoding a current block of a picture from a data stream, the apparatus configured to
- signal a syntax element associated with the current block into the data stream,
- use the syntax element to control a selected internal functionality out of a plurality of functionalities of a coding tool,
wherein the selected functionality is selected out of the plurality of functionalities according to an applicability condition for the current block for one or more functionalities of the plurality of functionalities, and
- encode the current block with the coding tool with the selected functionality controlled according to the syntax element.

14. A data stream having encoded thereinto a current block of a picture, wherein the current block is encoded using a method according to claim 11.

15. A non-transitory digital storage medium having a computer program stored thereon to perform the method according to any of the claims 1 - 11 when said computer program is run by a computer.
